# FASCICULE DE BREVET EUROPEEN

(11) **EP 4 453 536 B1**
(45) Date de publication et mention de la délivrance du brevet: **02.09.2026**
(21) Numéro de dépôt: 22847567.9
(22) Date de dépôt: 16.12.2022
(51) Int. Cl.: G01N 15/1434, G01N 15/14, G01N 21/53, G01N 21/64, G01N 21/03, G01N 21/05

(54) **ELÉMENT POUR SYSTÈME DE MESURE OPTIQUE**
ELEMENT FÜR EIN OPTISCHES MESSSYSTEM
ELEMENT FOR AN OPTICAL MEASUREMENT SYSTEM

(30) Priorité: 20.12.2021 FR 2114011
(43) Date de publication de la demande: 30.10.2024
(73) Titulaire: Diagdev, 34160 Castries (FR)
(72) Inventeur: MERCHEZ, Benoit, Georges, Gérard, 34980 Combaillaux (FR)
(74) Mandataire: Ernest Gutmann - Yves Plasseraud S.A.S.
(86) Numéro de dépôt international: PCT/FR2022/052395
(87) Numéro de publication internationale: WO 2023/118708

(56) Documents cités:
- WO-A1-2015/084676
- WO-A2-01/27590
- WO-A2-2007/100723
- US-A1- 2009 059 207
- US-A1- 2010 007 879
- US-A1- 2010 327 184
- US-A1- 2011 089 340
- US-A1- 2012 223 260
- US-A1- 2017 146 443

## Description

### Domaine technique de l'invention

L'invention concerne un élément pour système de mesure optique, destiné notamment à la réalisation de mesures permettant de caractériser des cellules, notamment des cellules biologiques, par cytométrie en flux.

### Etat de la technique antérieure

La cytométrie en flux permet de déterminer des caractéristiques et propriétés de cellules, par exemple leurs tailles, contenus intracellulaires, contenus en ADN, etc. Elle permet également l'étude de la variation et la distribution de ces caractéristiques au sein d'une population de cellules, aboutissant *in fine* à l'identification de sous populations parmi les cellules, comme par exemple la différentiation des différentes cellules composant le sang.

Par ailleurs, la cytométrie en flux est une méthode rapide. Typiquement, plusieurs milliers de cellules par minute sont caractérisées. Ainsi, elle permet le dénombrement et la caractérisation de sous-populations rares de cellules. La rareté de ces sous-populations ne permet généralement pas leur observation et caractérisation par microscopie, notamment en raison de l'impossibilité d'obtenir un nombre de mesures réalisées sur ces sous-populations qui soit statistiquement acceptable.

En outre, grâce à l'amélioration des capteurs optiques et notamment de leur capacité à détecter des signaux de plus en plus faibles en intensité, il est possible à la fois de mesurer le volume d'une cellule d'une part grâce à une mesure par impédance (mesure Coulter) et d'autre part d'obtenir des informations sur son contenu cellulaire grâce à une ou plusieurs mesure(s) optique(s).

La cytométrie en flux consiste principalement à faire passer individuellement des cellules dans une veine liquide de forte section par rapport à la taille des cellules. Cette veine liquide se termine par une buse présentant un orifice calibré, dimensionné pour empêcher le passage simultané ou trop rapproché dans le temps de deux voire plusieurs cellules. Le débit étant constant entre la veine liquide et l'orifice, le diamètre de la veine liquide diminuant, la vitesse des cellules augmente et, en sortie de la buse, les cellules atteignent des débits de l'ordre de plusieurs milliers de cellules par seconde dans un jet de liquide ayant le diamètre de la buse.

La mesure du volume des cellules est réalisée en mesurant l'impédance de part et d'autre de l'orifice de la buse. En effet, le volume d'une cellule est corrélé avec une variation d'impédance qu'entraine son passage dans un milieu conducteur (système Coulter), la cellule étant considérée comme étant isolante électriquement. Le volume est déterminé de manière absolue, quelle que soit la forme de la cellule.

Par ailleurs, le passage des cellules à travers l'orifice de la buse assure un certain centrage hydrodynamique des cellules et également l'orientation de celles-ci. Ainsi, il est possible de positionner précisément le jet sortant de la buse et contenant les cellules dans un faisceau lumineux émis par une source d'excitation. Lorsqu'une cellule traverse le faisceau lumineux, elle diffuse un certain nombre de signaux optiques utilisable par le cytomètre afin de déterminer les propriétés de la cellule.

Ces signaux optiques comprennent :
- la réflexion de la lumière sur la cellule, due à la différence d'indices entre le liquide et la cellule, mais également entre les différents composants de la cellule, se traduisant par la réflexion d'une partie d'un rayon lumineux incident ;
- la réfraction de la lumière sur la cellule se traduisant par une déviation du rayon lumineux pénétrant dans la cellule ; et
- la diffraction de la lumière sur la cellule, principalement sous un angle solide allant de quelques degrés jusqu'à un angle solide de 360°.

Tous ces signaux sont recueillis par un système optique de collecte, puis séparés en fonction de leur longueur d'onde (largeur à mi-hauteur comprise entre 20 et 50 nm, voire 30 à 40 nm) par un système de filtres optiques et enfin parviennent à différents capteurs lumineux.

Ces différents capteurs peuvent être adaptés pour :
- mesurer la diffusion aux petits angles (forward scatter en anglais) de la cellule ;
- mesurer la diffusion aux grands angles (side scatter en anglais) de la cellule ;
- mesurer l'absorbance de la cellule ; et
- mesurer la fluorescence de la cellule si celle-ci est marquée par un ou plusieurs fluorochromes.

La diffraction aux petits angles est due à la diffusion d'une partie de la lumière incidente arrivant à la surface de la membrane cellulaire par cette dernière. La partie de la lumière diffusée a la même longueur d'onde que la lumière incidente. Elle est captée dans l'axe de la lumière incidente. Elle donne des informations sur la taille et l'indice de réfraction moyen de la cellule.

La diffraction aux grands angles est due à la diffusion dans toutes les directions de l'espace de la partie de la lumière incidente qui a traversé la membrane cellulaire par les organites intracellulaires. Elle peut être captée par un photomultiplicateur ou une photodiode à effet avalanche. Mettant en jeu les propriétés de réfraction et de réflexion, elle donne des informations sur l'hétérogénéité fine du contenu cellulaire.

La mesure de l'absorbance et/ou extinction est quant à elle, réalisée dans l'axe du faisceau d'excitation de la cellule. Celle-ci est proportionnelle au diamètre de la cellule et à l'indice d'absorption des organites intracellulaires.

Dans le cas où la cellule est marquée par un ou plusieurs fluorochromes, ces derniers émettent, lors de leur excitation, de la fluorescence à une ou plusieurs longueurs d'onde supérieure à celle de la source d'excitation de façon isotropique, c'est-à-dire dans toutes les directions de l'espace. Des filtres interférentiels permettent la séparation des différentes longueurs d'onde de la fluorescence (généralement en des spectres de largeur à mi-hauteur de 20 à 50 nm, voire 30 à 40 nm), chacune envoyée sur un photomultiplicateur. L'intensité de la fluorescence mesurée est fonction du nombre de molécules de fluorochromes fixées sur la cellule. Par exemple, dans le cas de l'utilisation du marqueur DRACQ 5 qui est un fluorochrome traversant passivement la membrane cytoplasmique des cellules et se fixant spécifiquement sur l'ADN, il est possible d'extraire des informations sur des cellules nucléées. Le marqueur DRACQ 5 présente deux maximums d'absorption à 622 nm et 676 nm et deux autres dans la zone des ultraviolets à 240 nm et 314 nm. Il émet de la fluorescence dans le rouge avec des longueurs d'ondes comprises entre 665 nm et 800 nm. Le filtre généralement utilisé est un filtre de type dichroïque qui réfléchit à 90° du faisceau incident toutes les composantes spectrales inférieures à 650 nm et transmet les composantes spectrales supérieures à 650 nm. Compte tenu de la définition de la source lumineuse, le premier filtre est naturellement centré à la longueur d'onde de la source lumineuse avec une bande passante de l'ordre de 50 nm.

Ainsi, dans ce montage, il est possible de mesurer pour chaque particule trois grandeurs physiques : une mesure électrique représentative du volume de la particule, une mesure d'extinction liée à la réfringence de la cellule, et enfin une mesure de fluorescence liée au contenu en acides nucléiques de la cellule analysée.

La cytométrie en flux est avantageusement utilisée pour l'étude de l'hématologie permettant un diagnostic et un suivi thérapeutique de différents virus, infections et parasites, ainsi que l'étude fonctionnelle de cellules saines. Grâce à la cytométrie en flux, il est possible de compter et de caractériser les différents types de cellules sanguines. Par exemple, la cytométrie en flux appliquée aux leucocytes permet de connaitre leur nombre total et de les différencier selon leur morphologie et de les classer en trois types différents grâce à une mesure du volume cellulaire par impédance et une mesure d'absorption.

Un premier type est celui des monocytes qui sont des cellules de grandes tailles (20 à 40 µm de diamètre). La forme de leur noyau peut être arrondie, ovalaire, réniforme ou franchement irrégulière ; le cas le plus fréquent étant la forme réniforme. Leur chromatine est peu dense, non mottée, et de structure régulière. La durée de séjour des monocytes dans le sang est de 2 jours avant leur passage tissulaire et le temps de transit médullaire de 1 à 2 jours. Quand ils sont activés, ils deviennent des macrophages. Ils sont capables de phagocyter des bactéries, des cellules entières ainsi que diverses particules dites polluantes, comme par exemple des poussières.

Un deuxième type est celui des lymphocytes qui ont un rôle majeur dans le système immunitaire. Ils peuvent être séparés en deux groupes de tailles différentes :
- les lymphocytes de petite taille (7 à 9 µm de diamètre) qui présentent un noyau de 10 forme arrondie ou ovalaire, parfois réniforme avec un cytoplasme peu étendu, clair ou légèrement basophile et s'étendant le plus souvent d'un seul côté du noyau ; et
- les lymphocytes de plus grande taille (9 à 15 µm de diamètre) qui présentent un noyau centré ou légèrement excentré avec un cytoplasme plus étendu que celui des lymphocytes de petite taille et entourant complètement le noyau.

Un troisième type, celui des granulocytes ou encore appelés polynucléaires, et dont la fonction principale est la protection contre les infections, peut être différencié en trois sous-catégories. Tout d'abord, les neutrophiles sont les granulocytes les plus abondants (environ 96 %). Ils sont de forme arrondie et ont un diamètre de 12 à 14 µm. Ils sont caractérisés par la forme plurilobée de leur noyau (de 3 à 5 lobes). Ils présentent une durée de séjour dans le sang de 2 jours avant leur passage tissulaire et un temps de transit médullaire des précurseurs granuleux de 10 à 14 jours. Il existe un compartiment de réserve médullaire de neutrophiles. Ils sont très efficaces dans la destruction des bactéries et prédominent lors d'inflammations de type aigu. Leur rôle essentiel est la défense de l'organisme contre les microorganismes étrangers, tels que bactéries et levures. Leurs fonctions excrétrices favorisent les réactions inflammatoires locales des tissus et contribuent à la défense de ceux-ci. Ensuite, les basophiles sont très peu abondants et représentent seulement environ 0,5 % des leucocytes. Ils présentent un diamètre de 10 à 14 µm. Leur noyau bilobé est masqué par des granulations spécifiques qui sont assez nombreuses et dispersées dans toute la cellule. Leur durée de séjour dans le sang est de 12 à 24 heures, sans passage tissulaire connu. Le temps de transit médullaire serait identique à celui des neutrophiles. Une fonction importante des basophiles est d'attirer les éosinophiles. Enfin, les éosinophiles représentent environ 2 à 5% des leucocytes circulants (350 éléments par millimètre-cube environ). Ce sont des cellules de 12 à 14 µm de diamètre, caractérisées par un noyau bilobé et surtout par l'aspect des granulations qui sont sphériques (0,5 à 1,5 µm de diamètre). Ils contiennent des granules azurophiles. Les polynucléaires éosinophiles sont des cellules clés de l'inflammation allergique et de la défense antiparasitaire. Leur répartition est surtout tissulaire, la fraction circulante ne représentant que 1 % du nombre total des éosinophiles. Leur temps de transit dans le sang est de 3 à 8 heures après la sortie de la moelle et jusqu'à leur dépôt dans les tissus (notamment les intestins, les poumons, la peau et l'utérus) où ils auront une durée de vie d'une dizaine de jours. Autre exemple, il est possible de déterminer le nombre total d'érythrocytes et de plaquettes, de les différencier selon leur morphologie et de les classer grâce à une mesure du volume cellulaire par impédance et une mesure de l'absorption.

D'autres applications de la cytométrie en flux présentent un intérêt diagnostique évident grâce à la caractérisation et/ou au dénombrement des différents types de cellules sanguines telles que les réticulocytes, les érythroblastes, cellules immatures et précurseurs des leucocytes, les lymphocytes activés ou encore des plaquettes réticulées.

La mesure du volume d'une cellule par impédance utilise un dispositif comprenant une cuve dont la base, qui présente un orifice dont le diamètre de 50 µm environ, permet le passage individuel d'une cellule dans un flux liquide. En amont de l'orifice, le flux liquide est formé d'un jet d'échantillon comprenant les cellules à caractériser et d'un jet de gainage (généralement de l'eau salée) entourant le jet d'échantillon permettant l'hydrofocalisation du jet d'échantillon. Les terminaux d'un voltmètre sont connectés électriquement à des électrodes, dont l'une est disposée en amont de l'orifice et l'autre en aval, des joints toriques étant nécessaires pour assurer l'étanchéité à ces niveaux. La variation de tension observée au moment du passage d'une cellule est représentative de son volume.

La base de la cuve est généralement fabriquée à partir d'un disque de quelques millimètres de diamètre et de quelques micromètres d'épaisseur réalisé dans des pierres précieuses comme le rubis synthétique très onéreux. L'orifice de passage est usiné dans ce disque puis le disque est serti manuellement sur l'extrémité d'une buse. L'opération de sertissage n'est pas sans risques car des microfissures peuvent apparaitre créant ainsi une modification de la résistivité entre les électrodes positive et négative faussant ainsi la mesure de l'impédance.

En ce qui concerne les mesures optiques, celles-ci utilisent un autre dispositif comprenant une cuve formée d'une base plate présentant en son centre l'orifice de passage dont le diamètre de 80 µm permet le passage individuel d'une cellule dans un flux liquide et d'une enceinte transparente plaquée contre la base. Entre l'enceinte et la base, un joint assure l'étanchéité entre ces deux pièces. Une entrée de gainage secondaire au niveau de la partie basse de l'enceinte juste au voisinage de la base permet l'arrivée d'un jet de gainage pour le gainage du flux d'échantillon afin de l'accompagner sur une longueur de 400 µm où le flux d'échantillon croise un faisceau lumineux émis par la source d'excitation. Un deuxième joint est nécessaire pour assurer l'étanchéité sur la partie supérieure de la cuve.

Afin de réaliser en même temps la mesure du volume et les mesures optiques, il est possible de combiner les deux dispositifs en un seul dispositif en utilisant la base du dispositif de mesure du volume comme base pour le dispositif de mesure optique.

Cependant, un tel agencement nécessite l'utilisation de quatre joints. Par ailleurs, l'absence de fuites entre les différents éléments ne peut être garantie.

En outre, un tel dispositif de mesure nécessite un temps de montage et un temps de réglage importants. En effet il est souvent nécessaire de monter plusieurs sous-ensembles optiques constitués d'une ou plusieurs lentilles pour mettre en forme le faisceau dit d'excitation ainsi que le ou les faisceaux de réception. De plus, leur alignement sur le flux échantillon contenant les cellules est le plus souvent complexe et utilise généralement des platines micrométriques et/ou lames de verre.

En outre, la plupart de ces dispositifs n'utilisent simultanément que deux paramètres, à savoir la mesure du volume par impédance et l'absorbance comme mesure optique. Le diagnostic de certaines pathologies nécessite la numération et la caractérisation de plus en plus fine des cellules hématopoïétiques dans le sang circulant, demandant ainsi de multiplier le nombre de paramètres, le plus souvent optiques, rendant plus complexe le montage ainsi que le réglage.

Par ailleurs, toujours dans la nécessité de diagnostiquer certaines pathologies très particulières, notamment en discriminant les composantes ARN et ADN des cellules, la plupart de ces dispositifs utilisent plusieurs marqueurs différents et, par conséquent, de nombreuses longueurs d'ondes d'excitation. L'ensemble de ces combinaisons optiques demande généralement des systèmes très complexes, et donc très coûteux.

Afin de palier à au moins une partie de ces inconvénients, le document WO 2019/002787 A1 propose une cuve de mesure pour le dénombrement et/ou la caractérisation de cellules, comprenant une base et une enceinte latérale transparente s'étendant à partir de la base pour former avec celle-ci une chambre de mesure optique, la base présentant un orifice de passage de 30 à 100 µm de diamètre pour le passage de cellules, la base et l'enceinte latérale transparente formant une cuve monobloc adaptée à la fois à une mesure d'impédance et à une mesure optique.

Grâce à cette cuve de mesure monobloc, il est possible de se passer de trois des quatre joints préalablement nécessaires pour une cuve de mesure permettant à la fois la mesure du volume des cellules et des mesures optiques. En effet, du fait de son caractère monobloc, la cuve de mesure n'a plus besoin de joints entre l'orifice de passage et la chambre de mesures optiques ainsi qu'entre l'électrode positive et la pièce servant à l'évacuation des différents liquides (liquide de gainage, Lyse...). Par ailleurs, cette cuve de mesure permet une mesure de volume par impédance et des mesures optiques sur une même cellule à quelques microsecondes d'intervalle.

Cette cuve de mesure comporte par ailleurs des lentilles et est utilisée dans un système de mesure comportant un support sur lequel est montée ladite cuve ainsi qu'une source optique et des capteurs optiques. Des optiques de réception comportant des lentilles sont intercalées entre la cuve et les capteurs, ces optiques de réception devant être montées et réglées avec précision, ce qui est une étape complexe et longue à réaliser.

L'invention vise à remédier à cet inconvénient, de manière simple, fiable et peu onéreuse.

Le document US 2017/146443 A1 divulgue également un système de mesure par cytométrie en flux.

### Présentation de l'invention

A cet effet, l'invention concerne un élément pour système de mesure optique selon la revendication 1 comportant une première couronne s'étendant circonférentiellement autour d'un axe et comportant au moins une première lentille optique, une seconde couronne située radialement à l'extérieur de la première couronne, s'étendant selon ledit axe et entourant la première couronne et comportant au moins une seconde lentille optique, au moins une première lentille étant alignée avec au moins une seconde lentille, les première et seconde couronnes venant de matière de façon à former un élément monobloc, ledit élément comportant des moyens de centrage ou d'alignement situés au niveau d'au moins une seconde lentille et destinés à coopérer avec des moyens de centrage ou d'alignement complémentaires d'un émetteur ou d'un récepteur optique, ledit élément comportant en outre un orifice de passage calibré, destiné au passage d'un flux comportant un échantillon à analyser, situé et orienté selon ledit axe des première et seconde couronnes et débouchant dans un espace délimité par la première couronne et formant une chambre de mesure destinée à être traversée par ledit flux.

Les termes axial, radial et circonférentiel sont définis par rapport à l'axe précité desdites couronnes.

De cette manière, ledit élément intègre au moins une paire de lentilles agencées de façon à être alignées pour permettre une mesure optique, sans qu'il soit nécessaire de régler la position de la seconde lentille par rapport à la première lentille. Le terme couronne est utilisé pour indiquer que, dans le cas de l'utilisation de plusieurs lentilles, celles-ci sont réparties sur la circonférence. Bien entendu, la couronne peut être continue ou discontinue, s'étendre sur toute la circonférence, c'est-à-dire sur 360°, ou sur une partie seulement de la circonférence.

Le nombre de lentilles sur chaque couronne peut être au moins égal à 2, par exemple égal à 4 ou 8.

Ledit élément peut être réalisé dans un matériau transparent. Ledit élément peut être réalisé dans un matériau synthétique.

Ledit élément peut présenter un indice de réfraction compris entre 1,4 et 1,6. Par ailleurs, ledit matériau peut être choisi de manière à présenter une transmission supérieure à 90 % de la longueur d'onde de fonctionnement, de préférence de faible biréfringence et de faible distorsion à la chaleur.

Le matériau de la cuve monobloc peut comprendre principalement une résine polycyclooléfine, notamment plus de 95 % en poids de cette résine, voire plus de 99,5 % en poids de cette résine. Un exemple d'une telle résine est le Zeonex T62R de chez Zeon^{®}. Une telle résine est très liquide sous forme fondue pouvant être injectée à très forte pression avec un très faible rétreint et permettant de contrôler précisément les dimensions de la cuve monobloc et une rugosité de surface de qualité optique. Avantageusement le choix d'une telle résine garantit une stabilité au jaunissement dans le temps en comparaison au Zeonex E48R.

Ledit élément peut être réalisé dans un matériau présentant une faible résistance à l'absorption de l'eau, par exemple inférieure à 0,01 %. Ce matériau peut présenter une faible constante diélectrique, par exemple au maximum 3 F/m, à des fréquences inférieures à 3 MHz, voire inférieures à 1 MHz, de façon à garantir une bonne isolation électrique entre deux électrodes situées de part et d'autre de l'orifice de passage et destinées à une mesure d'impédance ou de résistivité.

Ledit élément peut être réalisé dans un matériau de type comprenant principalement une résine polycyclooléfine, notamment plus de 95 % en poids de cette résine, voire plus de 99,5 % en poids de cette résine.

Ledit orifice calibré peut être cylindrique à base circulaire et peut présenter un diamètre compris entre 30 et 100 micromètres.

Un tel orifice peut être obtenu par perçage laser.

Ledit orifice calibré peut être ménagé dans une paroi mince venant de matière avec lesdites premières et seconde couronnes, ladite paroi mince présentant une épaisseur comprise entre 10 et 80 micromètres.

Cette épaisseur peut être comprise entre 20 et 50 micromètres, par exemple de l'ordre de 30 micromètres.

Une telle paroi mince peut être obtenue par usinage laser d'une préforme réalisée par exemple par moulage par injection.

La chambre de mesure peut présenter une forme polygonale, par exemple hexagonale ou octogonale.

Au moins une première lentille peut être du type asphérique.

Ladite première lentille peut comporter une surface radialement interne plane, tournée vers la chambre de mesure. Ladite première lentille peut comporter une surface radialement externe de forme convexe, tournée du côté de la seconde couronne. Ladite surface radialement externe de la première lentille peut être une surface définie par la formule
Les lentilles asphériques permettent aux concepteurs optiques de corriger les aberrations en utilisant moins d'éléments qu'avec les optiques sphériques traditionnelles car elles leur apportent une plus grande correction de l'aberration par rapport à l'utilisation de plusieurs surfaces optiques sphériques. Une lentille asphérique, également appelée asphère, est une optique à symétrie de révolution, dont le rayon de courbure varie radialement depuis son centre. Elle améliore la qualité d'image, réduit le nombre d'éléments nécessaires, et réduit les coûts de conception.

Les lentilles asphériques ont été traditionnellement définies avec un profil de surface donné par l'équation suivante : $Z \left(s\right) = \frac{{Cs}^{2}}{1 + \sqrt{1 - \left(1+k\right) {C}^{2} {s}^{2}}} + {A}_{4} {s}^{4} + {A}_{6} {s}^{6} + {A}_{s} {s}^{8} + …$ Où:
Z est la déclivité par rapport au plan sagittal de la surface parallèle à l'axe optique
s est la distance radiale depuis l'axe optique
C est la courbure, c'est-à-dire l'inverse du rayon
k est la constante conique
A4, A6, A8...sont respectivement les 4^{e}, 6^{e} et 8^{e} ordre des termes asphériques

Chaque première lentille peut être du type asphérique.

Au moins une seconde lentille peut être du type sphérique.

Ladite lentille sphérique peut comporter une surface radialement interne plane, tournée vers la première couronne. Ladite lentille sphérique peut comporter une surface radialement externe en forme de portion de sphère, tournée à l'opposé de la première couronne. Le rayon de ladite portion de sphère est par exemple compris entre 3 et 20 mm.

Chaque seconde lentille peut être du type sphérique.

Lesdits moyens de centrage et de positionnement peuvent comporter deux surfaces planes formant un V entre elles. Les moyens de centrage et de positionnement complémentaires peuvent comporter une portion cylindrique destinée à venir en appui linéique sur chacune desdites surfaces planes.

Ledit élément peut comporter des moyens de blocage en rotation autour de l'axe des première et seconde couronnes, destinée à coopérer avec des moyens de blocage complémentaires d'une embase. Les moyens de blocage peuvent comporter une partie en saillie, par exemple un pion ou une nervure, destinée à être engagée dans un évidement de forme complémentaire de l'embase, ou inversement.

L'élément peut comporter une chambre amont, située à l'opposé de la chambre de mesure par rapport à la paroi mince.

Ladite chambre amont peut présenter une zone de forme conique ou tronconique. Ladite zone de forme conique ou tronconique peut comporter une extrémité élargie et une extrémité rétrécie, opposée à l'extrémité élargie et formée par la paroi mince comportant l'orifice calibré.

La paroi de la zone conique ou tronconique peut former un angle compris entre 10 et 30° par rapport à l'axe longitudinal de ladite chambre amont.

L'extrémité rétrécie peut présenter un diamètre compris entre 1 et 3 mm, par exemple de l'ordre de 2 mm.

L'invention concerne également un système de mesure comportant un élément du type précité, au moins un émetteur optique et au moins un récepteur optique, monté en regard d'une seconde lentille.

L'émetteur peut être une source incohérente de type diode électroluminescente (DEL) ou lampe à incandescence.

Le récepteur optique peut être une photodiode, une photodiode de type avalanche ou un photomultiplicateur.

Le système peut comporter des moyens d'amenée d'un fluide contenant un échantillon à caractériser dans la chambre amont, ledit fluide traversant l'orifice calibré et débouchant dans la chambre de mesure.

L'échantillon peut être un échantillon biologique, par exemple un échantillon sanguin.

Les moyens d'amenée du fluide contenant l'échantillon peuvent comporter un canal débouchant dans la chambre amont, par exemple dans une zone axialement médiane de ladite chambre amont. Ledit canal peut s'étendre dans une partie de la chambre amont.

Les moyens d'amenée du fluide contenant l'échantillon sont conçus pour délivrer un débit de fluide compris entre 1 et 6 µL/s.

Le système peut comporter des moyens d'amenée d'un premier fluide de gainage au niveau de la chambre amont.

Ladite chambre amont peut s'étendre selon l'axe des première et seconde couronnes.

Les moyens d'amenée du premier fluide de gainage peuvent comporter un canal débouchant au niveau de l'extrémité de la chambre amont opposée à la paroi mince. Le débouché dudit canal peut être décalé par rapport audit axe.

Les moyens d'amenée du premier fluide de gainage sont conçus pour délivrer un débit de fluide compris entre 1 et 20 µL/s.

Le système peut comporter des moyens d'amenée d'un second fluide de gainage au niveau de la chambre de mesure.

Lesdits moyens d'amenée du second fluide de gainage peuvent déboucher à proximité de la paroi mince, par exemple à une distance comprise entre 0,1 et 0,5 mm de la paroi mince. Lesdits moyens d'amenée du second fluide de gainage peuvent déboucher selon une direction perpendiculaire à l'axe des première et seconde couronnes, c'est-à-dire perpendiculaire à l'axe de l'orifice calibré de la paroi mince.

Les moyens d'amenée du second fluide de gainage peuvent être conçus pour délivrer un débit de fluide compris entre 30 et 80 µL/s.

Les fluides de gainage permettent de canaliser le flux de fluide contenant l'échantillon de manière à orienter et positionner les cellules contenues dans le flux de fluide, le long de l'axe.

Le système peut comporter un filtre interférentiel en regard d'au moins une seconde lentille, monté sur ledit élément, radialement entre les première et seconde couronnes.

Le système peut comporter un doublet achromatique monté sur l'élément et disposé en regard d'un émetteur optique et d'une lentille de la première couronne. Le doublet achromatique est dédié à la mise en forme du faisceau optique.

Un doublet achromatique permet de corriger les aberrations chromatiques et comporte une lentille formée de deux verres. Le doublet achromatique n'est pas formé de façon monobloc avec la seconde couronne. Dans un tel cas, la seconde couronne peut comporter une ouverture, le doublet achromatique étant monté dans ladite ouverture ou en regard de ladite ouverture, et peut être aligné avec la première lentille correspondante.

Le système peut comporter au moins deux électrodes, situées axialement de part et d'autre de l'orifice calibré, et des moyens de mesure aptes à mesurer une impédance entre lesdites électrodes.

Une telle mesure d'impédance peut notamment être utilisée pour compter le nombre de cellules traversant ledit orifice calibré, par unité de temps.

Les deux électrodes peuvent être écartées axialement l'une de l'autre d'une distance comprise entre 5 et 10 mm.

### Brève description des figures

[Fig. 1] est une vue en perspective, de dessus, d'un élément pour système de mesure optique, selon une forme de réalisation,
[Fig. 2] est une vue en perspective, de dessous, de l'élément de la figure 1,
[Fig. 3] est une vue de dessus d'une partie d'un système de mesure,
[Fig. 4] est une vue en coupe et en perspective de ladite partie du système de mesure,
[Fig. 5] est une vue en coupe et en perspective d'une partie du système de mesure,
[Fig. 6] est une vue en perspective d'une partie du système de mesure,
[Fig. 7] est une vue en coupe et en perspective d'une partie du système de mesure,

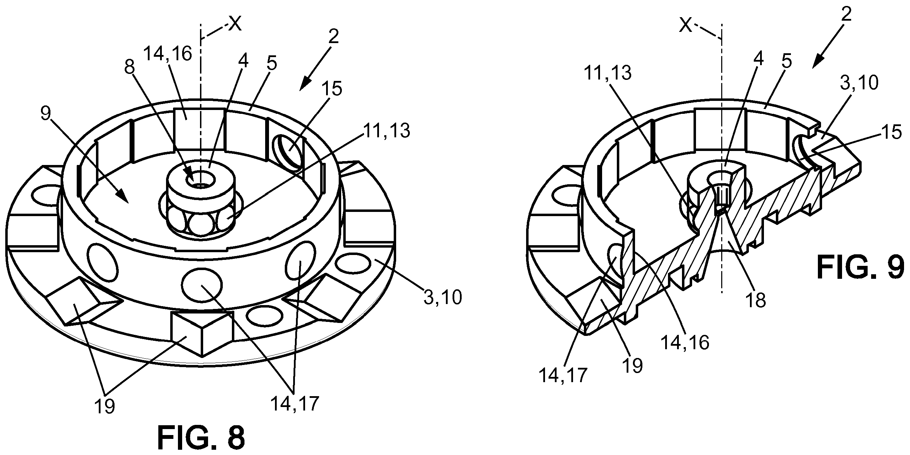

[Fig. 8] est une vue en perspective, de dessus, d'un élément pour système de mesure, selon une autre forme de réalisation,
[Fig. 9] est une vue en coupe et en perspective de l'élément de la figure 8,
[Fig. 10] est une vue de dessus d'une partie d'un système de mesure équipé de l'élément des figures 8 et 9.

### Description détaillée de l'invention

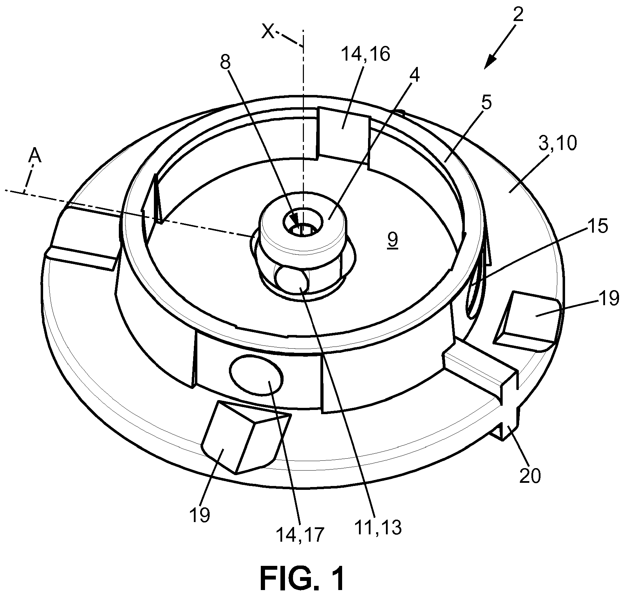

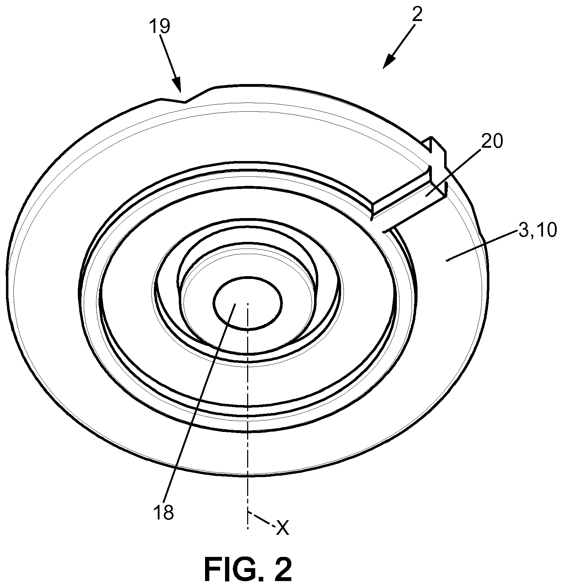

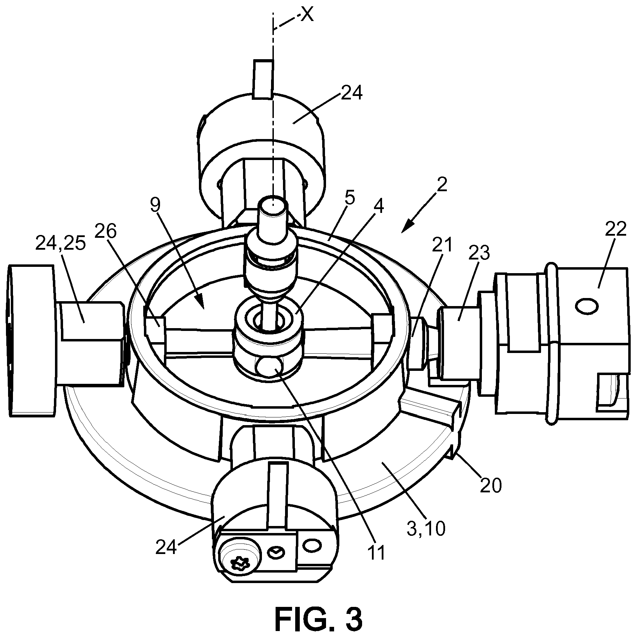

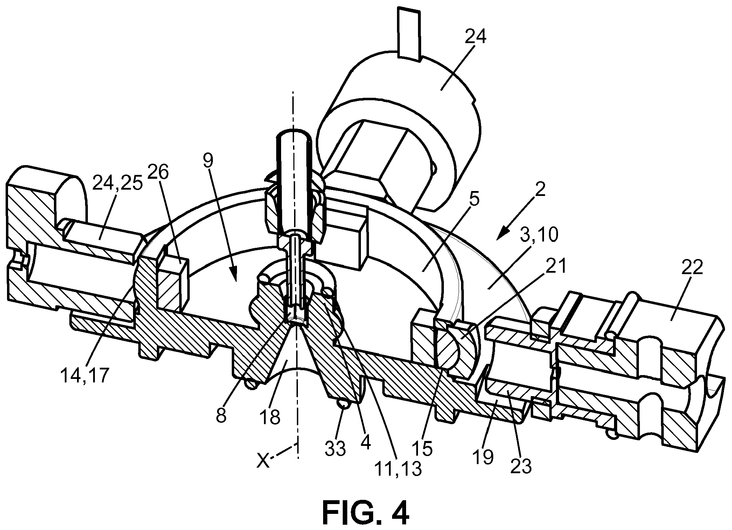

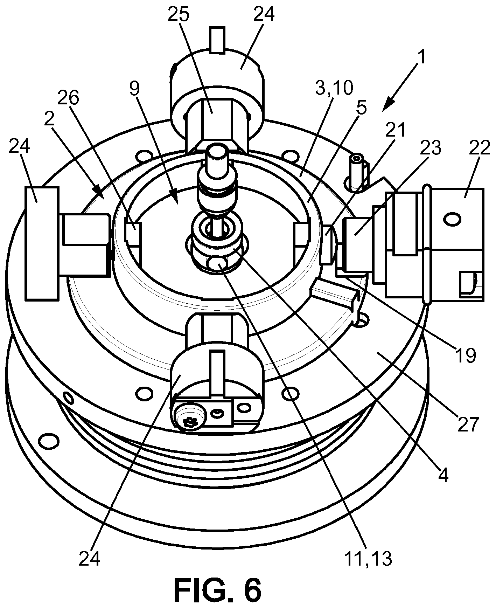

Un système de mesure 1 selon une forme de réalisation va maintenant être décrit en référence aux figures 1 à 7. Celui-ci comporte un élément 2 monobloc s'étendant autour d'un axe X. Ledit élément 2 comporte une base 3 en forme de disque à partir de laquelle s'étendent une première couronne 4, radialement interne, et une seconde couronne 5, radialement externe. Le centre de la base 3 comprend une zone de faible épaisseur, appelée paroi mince 6, pourvue d'un orifice calibré 7.

La paroi mince 6 comporte une épaisseur comprise entre 10 et 80 micromètres, par exemple de l'ordre de 30 micromètres, le diamètre de l'orifice 7 étant compris entre 30 et 100 micromètres.

L'espace délimité par la zone centrale de la base et la première couronne forme une chambre de mesure 8 de forme polygonale, par exemple hexagonale. Le côté de l'hexagone formant la base de la surface latérale de la chambre de mesure 8 est préférentiellement choisi entre 1 et 5 mm, préférentiellement environ 2mm. D'autres formes pour la base de la chambre de mesure 8 peuvent être choisies, telles que circulaire, triangulaire, etc. De préférence la forme de la base de la chambre de mesure 8 est une figure géométrique régulière, *i.e.* présentant au moins un élément de symétrie, de préférence un centre de symétrie ou un axe de symétrie, tel que l'axe X.

On désignera par la référence 9 l'espace annulaire situé entre la première couronne 4 et la seconde couronne 5. La zone de la base située radialement à l'extérieur de la seconde couronne 5 porte la référence 10.

La première couronne 4 comporte ici quatre lentilles 11, appelées premières lentilles, réalisées de façon monobloc avec le reste de l'élément 2. Chaque première lentille 11 est une lentille asphérique et comporte une surface radialement interne 12 plane, tournée vers la chambre de mesure. Chaque première lentille 11 comporte en outre une surface radialement externe 13 asphérique, de forme convexe, tournée du côté de la seconde couronne 5.

Le centre de l'asphère correspondante est situé à la sortie et à proximité de l'orifice calibré 7. Le point focal de chaque première lentille 11 est le centre de la cuve de mesure. L'intérêt de la lentille asphérique réside dans une amélioration des performances optiques en périphérie de l'image garantissant ainsi une aberration sphérique quasi nulle au point focal. Une telle structure réduit significativement l'aberration sphérique du système de mesure 1, garantissant un maximum de puissance au point de mesure. En outre, une ouverture numérique de l'ordre de 0,5 peut être obtenue sans utilisation d'objectifs, contrairement aux dispositifs du marché. Par ailleurs, la disposition du point focal des premières lentilles 11 à la sortie et à proximité de l'orifice calibré 7 permet des mesures optiques sur la cellule de l'échantillon à analyser, alors qu'elle vient de sortir de cet orifice 7 et que le centrage du flux d'échantillon est le meilleur. En effet, plus l'on s'éloigne de la sortie de l'orifice calibré 7 et plus la position de la cellule est incertaine et le risque qu'elle soit excentrée par rapport au jet d'échantillon est grand.

Le centre de la surface extérieure asphérique de chaque première lentille 11 est de préférence situé entre 200 et 600 µm, voire 300 et 500 µm, voire 350 et 450 µm, de préférence environ à 400 µm, de la sortie de l'orifice calibré 7 dans la direction du flux d'échantillon, c'est-à-dire selon l'axe X.

La seconde couronne 5 peut comporter jusqu'à sept lentilles 14, appelées secondes lentilles, alignées chacune avec une première lentille 11 selon un axe optique A s'étendant radialement par rapport à l'axe X. La seconde couronne 5 comporte par ailleurs une ouverture 15, dont la fonction sera décrite dans ce qui suit.

Chaque seconde lentille 14 est du type sphérique et comporte une surface radialement interne 16 plane, tournée vers la première couronne 4, et une surface radialement externe 17 en forme de portion de sphère, tournée à l'opposé de la première couronne 4. Le rayon de ladite portion de sphère est par exemple compris entre 3 et 20 mm.

La base 3 définit en outre une chambre amont 18, située à l'opposé de la chambre de mesure 8 par rapport à la paroi mince 6. Ladite chambre amont 18 présente une zone de forme conique ou tronconique, comprenant une extrémité élargie et une extrémité rétrécie, opposée à l'extrémité élargie et formée par la paroi mince 6 comportant l'orifice calibré 7.

La paroi de la zone conique ou tronconique peut former un angle compris entre 10 et 30° par rapport à l'axe X. L'extrémité rétrécie peut présenter un diamètre compris entre 1 et 3 mm, par exemple de l'ordre de 2 mm.

La zone périphérique externe 10 de la base 3 comporte par ailleurs des moyens de centrage ou de positionnement en regard de chaque seconde lentille 14 et de l'orifice 15 de la seconde couronne 5. Lesdits moyens de centrage et de positionnement comportent un évidement 19 formé de deux surfaces planes formant un V entre elles, un tel évidement 19 étant ménagé sur la surface supérieure de la base 3.

La base 3 comporte en outre des moyens de blocage en rotation autour de l'axe X, ces moyens de blocage en rotation comportant au moins une nervure 20 s'étendant depuis la surface inférieure de la base 3.

La base 3, les couronnes 4, 5 et les lentilles 11, 14 viennent de matière en une seule pièce. Cet élément 2 peut être réalisé par moulage par injection, la paroi mince 6 et l'orifice 7 pouvant être obtenus par usinage et perçage laser.

Ledit élément 2 est par exemple réalisé dans un matériau synthétique transparent, présentant une faible résistance à l'absorption de l'eau, par exemple inférieure à 0,01 %, et présentant une faible constante diélectrique, par exemple au maximum 3 F/m, à des fréquences inférieures à 3 MHz, voire inférieures à 1 MHz. Ledit élément 2 peut être réalisé dans un matériau de type comprenant principalement une résine polycyclooléfine, notamment plus de 95 % en poids de cette résine, voire plus de 99,5 % en poids de cette résine. Un exemple d'une telle résine est le Zeonex T62R de chez Zeon^{®}.

Ledit élément 2 peut présenter un indice de réfraction compris entre 1,4 et 1,6. Par ailleurs, ledit matériau peut être choisi de manière à présenter une transmission supérieure à 90 % de la longueur d'onde de fonctionnement, de préférence de faible biréfringence et de faible distorsion à la chaleur.

Un doublet achromatique 21 est monté au niveau de l'ouverture 15 de la seconde couronne 5, en regard de ou au moins partiellement dans ladite ouverture 15, sur l'axe optique traversant la première lentille 11 correspondante et ladite ouverture 15. Le doublet achromatique 21 comporte une lentille formée de deux verres. Le doublet achromatique 21 n'est pas formé de façon monobloc avec la seconde couronne 5.

Un élément 22 de mise en forme d'un faisceau lumineux issu d'au moins une source lumineuse est monté en regard du doublet achromatique 21, sur l'axe optique correspondant. La source lumineuse ou émetteur est par exemple une source lumineuse de type diode électroluminescente (DEL). L'élément 22 comporte un corps comprenant une zone cylindrique 23 venant en appui linéique sur chacune des surfaces planes de l'évidement 19 en forme de V, de façon à assurer le bon positionnement de l'émetteur sur l'axe optique. Cet élément de mise en forme 22 comporte par exemple une fenêtre traversée par un faisceau lumineux et agissant à la manière d'un diaphragme, par exemple de forme rectangulaire.

Des récepteurs optiques 24, par exemple destinés à des mesures d'absorbance, de diffusion, de diffraction et/ou de fluorescence, sont montés sur les axes optiques passant par les autres secondes lentilles 14. Chaque récepteur optique 24 comporte une zone 25 venant en appui sur chacune des surfaces planes de l'évidement correspondant 9 en forme de V, de façon à assurer le bon positionnement du récepteur 24 sur l'axe optique correspondant.

Un filtre interférentiel 26 est par ailleurs monté en regard de chaque seconde lentille 14 et éventuellement du doublet achromatique 21, radialement à l'intérieur de la seconde couronne 5.

La surface interne plane 16 de chacune des secondes lentilles 14 permet en particulier de recevoir un filtre interférentiel 26 de forme carré, dont la plage en longueurs d'ondes sera judicieusement choisie. La surface plane 16 permet notamment d'orienter angulairement chacun des filtres 26 afin de garantir leur bon fonctionnement. En effet l'orthogonalité entre chacun des faisceaux lumineux et la face parallèle de chacun des filtres interférentiels 26 doit être respectée. Classiquement, les lumières de fluorescence et de diffraction sont séparées sur la base de leurs propriétés spectrales. Pour ce faire, on utilise généralement des filtres optiques interférentiels du type multidiélectriques, c'est-à-dire des filtres obtenus par le dépôt alterné de deux ou plusieurs matériaux transparents ayant des indices de réfraction distincts. Ce sont avantageusement des filtres à bombardage ionique, ce qui leur confère un très bon blocage hors bande spectrale et une très bonne transmission. Ces filtres 26 sont installés sur les chemins lumineux entre la chambre de mesure 8 et chaque seconde lentille 14, dans les zones où les rayons lumineux issus de l'interaction entre la lumière et les cellules de l'échantillon sont collimatés. Des filtres divers peuvent être utilisés en fonction des longueurs d'ondes de fluorescences attendues et des longueurs d'onde d'illuminations utilisées.

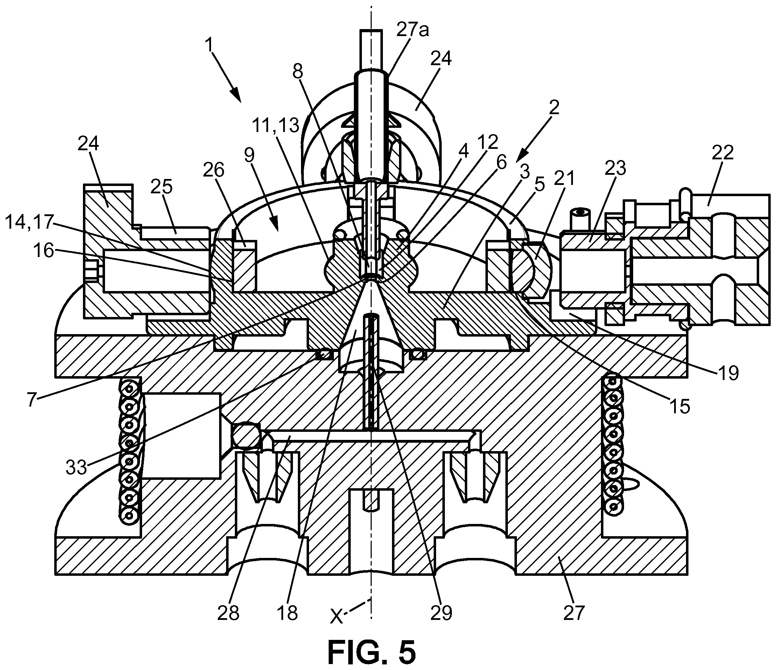

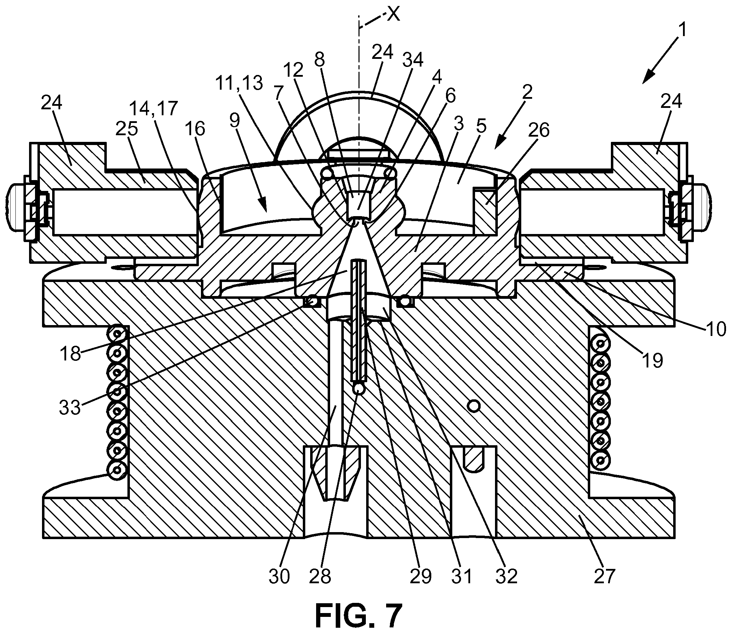

Comme illustré aux figures 5 à 7, le système 1 comporte en outre une embase 27 sur laquelle est monté l'élément 2. L'embase 27 comporte des canaux d'amenée 28 d'un fluide contenant un échantillon à analyser, par exemple un échantillon biologique tel que du sang. Les canaux 28 débouchent dans la chambre amont 18 par l'intermédiaire d'une buse 29 s'étendant selon l'axe X. Par ailleurs, comme cela est visible sur la coupe de la figure 7, l'embase 27 comporte également un canal 30 d'amenée d'un premier fluide de gainage (figure 7), débouchant au niveau d'une paroi de fond 31 d'une chambre cylindrique 32 de l'embase 27, ladite chambre cylindrique 32 s'étendant selon l'axe X et débouchant dans la chambre amont 18 de l'élément 2, au niveau de son extrémité élargie. Plus particulièrement, le premier fluide de gainage débouche en périphérie radialement externe de la chambre cylindrique 32. Un joint torique 33 assure l'étanchéité entre la chambre cylindrique 32 de l'embase 27 et la chambre amont 18 de l'élément 2.

De plus, un second fluide de gainage débouche dans la chambre de mesure 8, au travers d'un canal 34 (figure 7) ménagé dans l'élément 2, ledit canal 34 débouchant dans une direction perpendiculaire à l'axe X.

La nervure 20 de l'élément 2 est engagée dans une rainure de forme complémentaire de l'embase 27, de manière à assurer le positionnement et le l'immobilisation en rotation de l'élément 2 par rapport à l'embase 27.

Le système comporte au moins une première électrode 27a, par exemple en platine, une seconde électrode pouvant être formée par l'embase 27, qui est par exemple en inox.

Ces électrodes 27, 27a sont situées axialement de part et d'autre de l'orifice calibré 7 et de la paroi mince 6.

Le système comporte également des moyens de mesure aptes à mesurer une impédance entre lesdites électrodes.

Les deux électrodes peuvent être écartées axialement l'une de l'autre d'une distance comprise entre 5 et 10 mm.

En fonctionnement, du fluide contenant l'échantillon à analyser est amené dans la chambre amont 18 par la canalisation 28 et la buse 29 correspondante, ce fluide s'écoulant selon l'axe X et débouchant dans la chambre de mesure 8 au travers de l'orifice calibré 7. Parallèlement un premier flux de fluide de gainage débouche dans la chambre cylindrique 32, au travers de la canalisation 30, puis maintient le fluide contenant l'échantillon le long de l'axe X, dans la chambre amont 18 de l'élément 2. Ce premier fluide de gainage assure ainsi le centrage hydrodynamique du jet de fluide contenant l'échantillon. Un tel phénomène est connu sous le terme d'hydro-focalisation et permet de canaliser le flux de fluide contenant l'échantillon de manière à orienter et positionner les cellules contenues dans ce flux de fluide, le long de l'axe X.

Par ailleurs, le deuxième fluide de gainage est amené en sortie de l'orifice calibré 7, au niveau du débouché du canal 34. Ce deuxième fluide de guidage permet d'empêcher la formation de volume de recirculation en balayant la zone, empêchant une cellule sortant du flux de fluide contenant l'échantillon en aval de l'orifice calibré 7, et à distance de cet orifice 7, de façon à faciliter les mesures optiques effectuées.

Le débit de fluide contenant l'échantillon est par exemple compris entre 1 et 6 µL/s.

Le débit du premier fluide de gainage est compris entre 1 et 20 µL/s. Le débit du second fluide de gainage est compris entre 30 et 80 µL/s.

Des mesures optiques sont par ailleurs effectuées, à l'aide des récepteurs optiques 24.

Comme indiqué précédemment, la réalisation monobloc de l'élément 2 permet de baisser le coût total du système de mesure 1 en exemptant l'utilisateur de devoir disposer des lentilles convergentes entre d'une part la chambre de mesure 8 et d'autre part la source d'excitation ou source lumineuse, et les récepteurs 24 ou capteurs, et de devoir procéder à de nombreux réglages. Par ailleurs, un tel élément 2 permet la réalisation de mesures tout autour des couronnes 4, 5 portant les lentilles 11, 14, sur 360°.

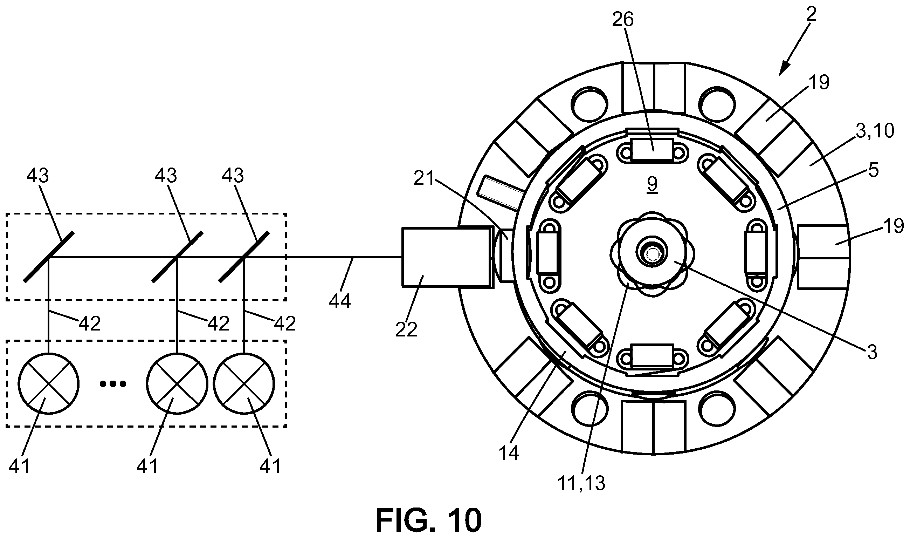

La figure 10 illustre une autre forme de réalisation dans lequel l'élément 2 comporte huit première lentilles 11 sur la première couronne 4 et sept premières lentilles 11 et un doublet achromatique 21 sur la deuxième couronne 5.

L'ensemble comporte par ailleurs plusieurs sources lumineuses 41 distinctes, aptes à émettre chacune un flux lumineux 42 en direction d'un miroir dichroïque 43 agissant à la manière d'un filtre capable de diriger un flux lumineux d'un spectre lumineux particulier dans une fibre optique 44 reliée à l'élément de mise en forme 22.

L'utilisation d'une fibre optique permet d'homogénéiser le flux lumineux et d'écarter les sources de lumières de l'élément 2 afin d'éviter un endommagement thermique de l'élément 2 ou de l'échantillon par la chaleur émise par les sources lumineuses 41.

On notera les filtres 26 peuvent être adaptés aux longueurs d'ondes issues de l'interaction entre le faisceau lumineux et l'échantillon, par exemple les cellules sanguines.

## Revendications

1. Elément (2) pour système de mesure (1) optique comportant une première couronne (4) s'étendant circonférentiellement autour d'un axe (X) et comportant au moins une première lentille optique (11), une seconde couronne (5) située radialement à l'extérieur de la première couronne (4), s'étendant selon ledit axe (X), entourant la première couronne (4) et comportant au moins une seconde lentille optique (14), au moins une première lentille (11) étant alignée avec au moins une seconde lentille (14), les première et seconde couronnes (4, 5) venant de matière de façon à former un élément (2) monobloc, ledit élément (2) comportant des moyens de centrage ou d'alignement (9) situés au niveau d'au moins une seconde lentille (14) et destinés à coopérer avec des moyens de centrage ou d'alignement complémentaires (23, 25) d'un émetteur ou d'un récepteur (24) optique, ledit élément (2) comportant en outre un orifice de passage calibré (7), destiné au passage d'un flux comportant un échantillon à analyser, situé et orienté selon ledit axe (X) des première et seconde couronnes (4, 5) et débouchant dans un espace (8) délimité par la première couronne (4) et formant une chambre de mesure destinée à être traversée par ledit flux.

2. Elément (2) selon la revendication précédente, **caractérisé en ce que** ledit orifice calibré (7) est cylindrique à base circulaire et présente un diamètre compris entre 30 et 100 micromètres.

3. Elément (2) selon l'une des revendications précédentes, **caractérisé en ce que** ledit orifice calibré (7) est ménagé dans une paroi mince (6) venant de matière avec lesdites premières et seconde couronnes (4, 5), ladite paroi mince (6) présentant une épaisseur comprise entre 10 et 80 micromètres.

4. Elément (2) selon l'une des revendications précédentes, **caractérisé en ce que** au moins une première lentille (11) est du type asphérique.

5. Elément (2) selon l'une des revendications précédentes, **caractérisé en ce que** au moins une seconde lentille (14) est du type sphérique.

6. Elément (2) selon la revendication 3 et selon l'une des revendications précédentes, **caractérisé en ce qu'**il comporte une chambre amont, située à l'opposé de la chambre de mesure par rapport à la paroi mince.

7. Système de mesure (1) comportant un élément (2) selon l'une des revendications précédentes, au moins un émetteur optique et au moins un récepteur optique (24), monté en regard d'une seconde lentille (14).

8. Système selon la revendication 7, comportant un élément (2) selon la revendication 6, **caractérisé en ce qu'**il comporte des moyens (28, 29) d'amenée d'un fluide contenant un échantillon à caractériser dans la chambre amont (18), ledit fluide traversant l'orifice calibré (7) et débouchant dans la chambre de mesure (8).

9. Système selon la revendication 8, **caractérisé en ce qu'**il comporte des moyens (30) d'amenée d'un premier fluide de gainage au niveau de la chambre amont (18).

10. Système selon la revendication 8 ou 9, **caractérisé en ce qu'**il comporte des moyens (34) d'amenée d'un second fluide de gainage au niveau de la chambre de mesure (8).

11. Système selon l'une des revendications 8 à 10, comportant un filtre interférentiel en regard d'au moins une seconde lentille (14), monté sur ledit élément (2), radialement entre les première et seconde couronnes (4, 5).

12. Système selon l'une des revendication 8 à 11, **caractérisé en ce qu'**il comporte un doublet achromatique (21) monté sur l'élément (2) et disposé en regard d'un émetteur optique et d'une lentille (11) de la première couronne (4).

13. Système selon l'une des revendication 8 à 12, **caractérisé en ce qu'**il comporte au moins deux électrodes, situées axialement de part et d'autre de l'orifice calibré (7), et des moyens de mesure aptes à mesurer une impédance entre lesdites électrodes.

## Patentansprüche

1. Bauteil (2) für ein optisches Messsystem (1), umfassend einen ersten Kranz (4), welcher sich in Umfangsrichtung um eine Achse (X) erstreckt und mindestens eine erste optische Linse (11) umfasst, einen zweiten Kranz (5), welcher radial außerhalb des ersten Kranzes (4) angeordnet ist, sich entlang der Achse (X) erstreckt, den ersten Kranz (4) umgibt und mindestens eine zweite optische Linse (14) umfasst, wobei mindestens eine erste Linse (11) mit mindestens einer zweiten Linse (14) ausgerichtet ist, wobei der erste und der zweite Kranz (4, 5) derart einstückig ausgebildet sind, sodass sie ein einteiliges Bauteil (2) bilden, wobei das Bauteil (2) Zentrier- oder Ausrichtungsmittel (9) umfasst, welche im Bereich mindestens einer zweiten Linse (14) angeordnet sind und dazu bestimmt sind, mit komplementären Zentrier- oder Ausrichtungsmitteln (23, 25) eines optischen Senders oder Empfängers (24) zusammenzuwirken, wobei das Bauteil (2) ferner eine kalibrierte Durchgangsöffnung (7) umfasst, welche für den Durchlass eines Flusses bestimmt ist, welcher eine zu analysierende Probe enthält, entlang der Achse (X) des ersten und des zweiten Kranzes (4, 5) angeordnet und ausgerichtet ist und in einen Raum (8) mündet, welcher durch den ersten Kranz (4) begrenzt ist und eine Messkammer bildet, welche dazu bestimmt ist, von dem genannten Fluss durchströmt zu werden.

2. Bauteil (2) nach dem vorangegangenen Anspruch, **dadurch gekennzeichnet, dass** die kalibrierte Öffnung (7) zylindrisch mit kreisförmiger Grundfläche ausgebildet ist und einen Durchmesser zwischen 30 und 100 Mikrometer aufweist.

3. Bauteil (2) nach einem der vorangegangenen Ansprüche, **dadurch gekennzeichnet, dass** die kalibrierte Öffnung (7) in einer dünnen Wand (6) eingebracht ist, welche einstückig mit dem ersten und dem zweiten Kranz (4, 5) ausgebildet ist, wobei die dünne Wand (6) eine Dicke zwischen 10 und 80 Mikrometer aufweist.

4. Bauteil (2) nach einem der vorangegangenen Ansprüche, **dadurch gekennzeichnet, dass** mindestens eine erste Linse (11) asphärisch ausgebildet ist.

5. Bauteil (2) nach einem der vorangegangenen Ansprüche, **dadurch gekennzeichnet, dass** mindestens eine zweite Linse (14) sphärisch ausgebildet ist.

6. Bauteil (2) nach Anspruch 3 und nach einem der vorangegangenen Ansprüche, **dadurch gekennzeichnet, dass** es eine Vorkammer umfasst, welche bezogen auf die dünne Wand auf der der Messkammer gegenüberliegenden Seite angeordnet ist.

7. Messsystem (1), umfassend ein Bauteil (2) nach einem der vorangegangenen Ansprüche, mindestens einen optischen Sender und mindestens einen optischen Empfänger (24), welcher gegenüber einer zweiten Linse (14) angeordnet ist.

8. System nach Anspruch 7, umfassend ein Bauteil (2) nach Anspruch 6, **dadurch gekennzeichnet, dass** es Mittel (28, 29) zum Zuführen eines eine zu charakterisierende Probe enthaltenden Fluids in die Vorkammer (18) umfasst, wobei das Fluid die kalibrierte Öffnung (7) durchströmt und in die Messkammer (8) mündet.

9. System nach Anspruch 8, **dadurch gekennzeichnet, dass** es Mittel (30) zum Zuführen eines ersten Hüllfluids im Bereich der Vorkammer (18) umfasst.

10. System nach Anspruch 8 oder 9, **dadurch gekennzeichnet, dass** es Mittel (34) zum Zuführen eines zweiten Hüllfluids im Bereich der Messkammer (8) umfasst.

11. System nach einem der Ansprüche 8 bis 10, umfassend ein Interferenzfilter gegenüber mindestens einer zweiten Linse (14), welches an dem Bauteil (2) radial zwischen dem ersten und dem zweiten Kranz (4, 5) angebracht ist.

12. System nach einem der Ansprüche 8 bis 11, **dadurch gekennzeichnet, dass** es ein achromatisches Doublett (21) umfasst, welches auf dem Bauteil (2) angebracht und gegenüber einem optischen Sender und einer Linse (11) des ersten Kranzes (4) angeordnet ist.

13. System nach einem der Ansprüche 8 bis 12, **dadurch gekennzeichnet, dass** es mindestens zwei Elektroden, welche axial beiderseits der kalibrierten Öffnung (7) angeordnet sind, sowie Messmittel umfasst, welche dazu geeignet sind, eine Impedanz zwischen den genannten Elektroden zu messen.

## Claims

1. An element (2) for optical measurement system (1) comprising a first crown (4) extending circumferentially around an axis (X) and comprising at least one first optical lens (11), and a second crown (5) located radially outside of the first crown (4), extending along said axis X, surrounding the first crown (4) and comprising at least one second optical lens (14) where at least one first lens (11) is aligned with at least one second lens (14), the first and second crowns (4, 5) are made of the same material so as to form a unitary element (2), said element (2) comprising centering or alignment means (9) located near at least one second lens (14) and intended to engage with additional centering or alignment means (23, 25) of an optical emitter or receiver (24), and said element (2) further comprising a calibrated passage opening (7), intended for the passage of a flow comprising a sample to be analyzed, located and oriented along said axis (X) of the first and second crowns (4, 5) and opening out in a space (8) delimited by the first crown (4) and forming a measurement chamber through which said fluid is intended to pass.

2. The element (2) according to the preceding claim, **characterized in that** said calibrated opening (7) is cylindrical with a circular base and has a diameter included between 30 and 100 µm.

3. The element (2) according to one of the preceding claims, **characterized in that** said calibrated opening (7) is provided in a thin wall (6) of the same material as said first and second crowns (4, 5), said thin wall (6) having a thickness included between 10 and 80 µm.

4. The element (2) according to one of the preceding claims, **characterized in that** at least one first lens (11) is aspheric type.

5. The element (2) according to one of the preceding claims, **characterized in that** at least one second lens (14) is spheric type.

6. The element (2) according to claim 3 and according to one of the preceding claims, **characterized in that** it comprises an upstream chamber, located across from the measurement chamber relative to the thin wall.

7. A measurement system (1) comprising an element (2) according to one of the preceding claims, at least one optical emitter, and at least one optical receiver (24), mounted facing a second lens (14).

8. The system according to claim 7, comprising an element (2) according to claim 6 **characterized in that** it comprises means (28, 29) for bringing a fluid containing a sample to be characterized into the upstream chamber (18), where said fluid passes through the calibrated opening (7) and opens into the measurement chamber (8).

9. The system according to claim 8 **characterized in that** it comprises means (30) for bringing a first sheath fluid near the upstream chamber (18).

10. The system according to claim 8 or 9, **characterized in that** it comprises means (34) for bringing a second sheath fluid near the measurement chamber (8).

11. The system according to one of claims 8 to 10, comprising an interference filter facing at least one second lens (14), mounted on said element (2), radially between the first and second crowns (4, 5).

12. The system according to claim 8 to 11, **characterized in that** it comprises an achromatic doublet (21) mounted on the element (2) and arranged facing an optical emitter (11) and a lens of the first crown (4).

13. The system according to claim 8 to 12, **characterized in that** it comprises at least two electrodes, located axially on either side of the calibrated opening (7), and measurement means suited for measuring an impedance between said electrodes.
